# EUROPÄISCHE PATENTSCHRIFT

(11) **EP 1 315 262 B1**
(45) Veröffentlichungstag und Bekanntmachung des Hinweises auf die Patenterteilung: **22.02.2006**
(21) Anmeldenummer: 02024654.2
(22) Anmeldetag: 05.11.2002
(51) Int. Cl.: H02G 3/10

(54) **Geräteträger für Leitungsführungskanälen**
Apparatus holder for cable channels
Support d'appareillage pour conduites de câbles

(30) Priorität: 22.11.2001 DE 20119103 U
(43) Veröffentlichungstag der Anmeldung: 28.05.2003
(73) Patentinhaber: Tehalit GmbH, 67716 Heltersberg (DE)
(72) Erfinder: Ostertag, Christian, 67240 Bischwiller (FR); Arnold, Hans-Joachim, 67706 Krickenbach (DE)
(74) Vertreter: Patentanwälte Möll und Bitterich

(56) Entgegenhaltungen:
- EP-A- 0 911 932
- DE-A- 4 436 147

## Beschreibung

Die Erfindung betrifft Geräteträger für die Montage von Elektroinstallationsgeräten neben senkrecht oder waagerecht verlegten Leitungsführungskanälen, insbesondere Sockelleistenkanälen, gemäß dem Oberbegriff 1.

Um Elektroinstallationsgeräte, insbesondere Steckdosen, an einem Sockelleistenkanal anzubringen, werden spezielle Geräteträger verwendet. Man vergleiche EP 0 159 554 A, EP 0 239 456 A, FR 27 70 047 A oder EP 0 702 442 B. In allen Fällen besitzt der Geräteträger eine Bodenplatte, die neben dem Sockelleistenkanal an der Wand befestigt wird, wozu in der Bodenplatte Öffnungen vorgesehen sind. Auf der Bodenplatte sind Vorrichtungen vorgesehen, an denen das Elektroinstallationsgerät, welches mit korrespondierenden.Einrichtungen versehen ist, befestigt wird. Schließlich besitzt der Geräteträger noch eine Abdeckhaube, die Bodenplatte und Elektroinstallationsgerät abdeckt.

Eine handelsübliche Art von Elektroinstallationsgeräten besitzt ein etwa quaderförmiges Gehäuse mit quadratischem Grundriss, an dem rechts und links abstehend eine Haltelasche angeformt ist. Zur Befestigung eines solchen Installationsgerätes besitzt der in der FR 27 70 047 A beschriebene Geräteträger vier auf der Grundplatte befestigte Halterungen. Um das Einschnappen der Haltelaschen zu ermöglichen, besitzen die Halterungen eine gewisse Flexibilität. Wird nun aus einer aufgerasteten Steckdose ein fest sitzender Stecker herausgezogen, so wirken erhebliche Kräfte auf die Halterungen. Da diese flexibel sind, können sie zur Seite ausweichen, worauf sich das Installationsgerät vom Geräteträger löst. Damit sind die spannungsführenden Leitungen und Kontakte direkt zugänglich, die elektrische Sicherheit ist nicht mehr gegeben. Das ist unzulässig.

Bei den in der EP 0 159 554 A oder der EP 0 239 456 A beschriebenen Geräteträgern werden die Elektroinstallationsgeräte an Haltepfosten auf der Grundplatte festgeschraubt. Eine solche Schraubverbindung kann sich auch bei hohen Zugkräften nicht lösen. Allerdings ist eine Schraubmontage zeitaufwändig. Auch wird das Anbringen der Sicherungsschrauben gern vergessen. Das ist ebenfalls unbefriedigend.

Der vorliegenden Erfindung liegt die Aufgabe zugrunde, einen Geräteträger für Sockelleistenkanäle anzugeben, an dem die beschriebenen Elektroinstallationsgeräte in einfachster Weise ohne Werkzeug so befestigt werden können, dass sich das Elektroinstallationsgerät auch bei hohen Abzugskräften nicht von der Grundplatte löst.

Diese Aufgabe wird gelöst durch einen Geräteträger mit den Merkmalen des Anspruchs 1.

Die vorliegende Erfindung beruht auf dem Prinzip, dass die Montagerichtung im rechten Winkel zur Abzugsrichtung verläuft. Da die Halterungen jetzt nicht mehr federnd ausgebildet sein müssen, können sie sehr stabil ausgeführt werden und große Kräfte aufnehmen. Gleichwohl ist das Eindrehen des Elektroinstallationsgerätes in die bajonettartige Halterung ohne Werkzeug und mit kleinem Kraftaufwand möglich. Der Geräteträger hat die gleiche Größe wie die bekannten Geräteträger.

Wie im Stand der Technik prinzipiell bekannt, können auch beim erfindungsgemäßen Geräteträger auf der Grundplatte zwei Paare von Halterungen angebracht werden, so dass die Elektroinstallationsgeräte um 90° gedreht montiert werden können.

Sobald die Abdeckhaube auf Geräteträger und Installationsgerät aufgesetzt ist, ist das Installationsgerät gegen ein versehentliches Rückdrehen und Lösen gesichert. Falls der Wunsch nach einer zusätzlichen Sicherung besteht, kann gemäß einer Weiterbildung der Erfindung eine Haltenase vorgesehen werden, vorzugsweise auf der Grundplatte, die die Haltelasche in der Halterung blockiert.

Dabei kann die Haltenase vorzugsweise federnd ausgebildet sein, so dass es bei Bedarf möglich ist, das Gerät wieder vom Geräteträger zu lösen.

Anhand der Zeichnung soll die Erfindung in Form eines Ausführungsbeispiels näher erläutert werden. Es zeigen
- Fig.1: eine Draufsicht auf einen Geräteträger für Sockelleistenkanäle und
- Fig.2: einen Schnitt entlang der Linie II-II durch den Geräteträger der Fig. 1.

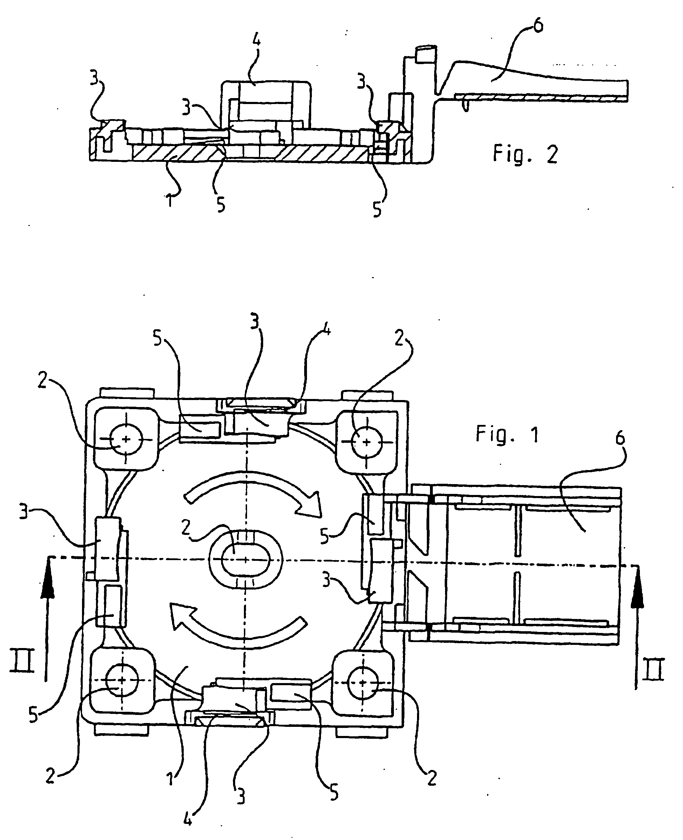

Fig. 1 als Draufsicht und Fig. 2 als Schnitt entlang der Linie II-II zeigen einen Geräteträger für Sockelleistenkanäle zur lösbaren Befestigung von handelsüblichen Elektroinstallationsgeräten (nicht dargestellt), die mit zwei radial orientierten Haltelaschen ausgerüstet sind. Der Geräteträger besitzt eine Bodenplatte 1, an deren vier Ecken und in deren Zentrum Befestigungsöffnungen 2 vorgesehen sind. Dank dieser Öffnungen 2 kann der Geräteträger mittels Dübel und Schrauben an einer Wand befestigt werden.

An der Unterkante der Bodenplatte 1 erkennt man des -weiteren eine Abdeckschürze 6, die einen Sockelleistenkanal (nicht dargestellt) übergreift und so die elektrische Isolation der verschiedenen Stromkreise sicherstellt.

An den vier Längsseiten der Bodenplatte 1 erkennt man zwei Paare von einander radial gegenüberliegenden Halterungen 3, die mit den Haltelaschen des Elektroinstallationsgerätes kooperieren. Diese Halterungen 3 sind so ausgebildet, dass die Haltelaschen des Elektroinstallationsgerätes durch eine 45°-Drehung bajonettartig eingedreht werden können. Die Halterungen 3 selbst sind sehr stabil ausgebildet und können daher hohe Kräfte übertragen. Dadurch kann sich das Elektroinstallationsgerät nicht mehr unbeabsichtigt vom Geräteträger lösen.

Als Sicherung gegen ein versehentliches Rückdrehen und Lösen des Elektroinstallationsgerätes sind auf der Grundplatte 1 vor jeder Halterung 3 Haltenasen 5 vorgesehen. Diese können federnd ausgebildet sein, so dass das Gerät bei Bedarf wieder gelöst werden kann. Unter Umständen genügt jedoch schon die stets vorgesehene Abdeckhaube (nicht dargestellt), um das Gerät gegen Lösen zu sichern.

Entsprechende Haltenasen können aber auch an den Halterungen 3 angeformt werden.

## Patentansprüche

1. Geräteträger für die Montage von Elektroinstallationsgeräten neben senkrecht oder waagerecht verlegten Leitungsführungskanälen, insbesondere Sockelleistenkanälen, mit einer Abdeckschürze (6), die den kanal übergreift, mindestens umfassend
- eine Bodenplatte (1) mit
- Befestigungsöffnungen (2) zur Befestigung an einer Wand,
- Halterungen (3) zur lösbaren Befestigung von Elektroinstallationsgeräten, die mit zwei radial orientierten Haltelaschen ausgerüstet sind,
- und Vorrichtungen (4) zur lösbaren Montage einer Abdeckhaube, die die Bodenplatte (1) und die Elektroinstallationsgeräte abdeckt,
**gekennzeichnet durch** das Merkmal:
- die Halterungen (3) sind als bajonettartige Halterungen ausgebildet, in die die Haltelaschen des Installationsgerätes eindrehbar sind.

2. Geräteträger nach Anspruch 1, **gekennzeichnet durch** das Merkmal:
- es sind zwei um 90° gegeneinander versetzte Paare von bajonettartigen Halterungen (3) vorgesehen.

3. Geräteträger nach Anspruch 1 oder 2, **gekennzeichnet durch** das Merkmal:
- wenigstens eine Haltenase (5) blockiert die Haltelaschen in den bajonettartigen Halterungen (3).

4. Geräteträger nach Anspruch 3, **gekennzeichnet durch** das Merkmal:
- die Haltenase (5) ist federnd ausgebildet.

5. Geräteträger nach Anspruch 3 oder 4, **gekennzeichnet durch** das Merkmal:
- die Haltenase (5) sitzt an der Bodenplatte (1).

## Claims

1. Apparatus holder for mounting electrical installation apparatus next to wiring trunking installed vertically or horizontally, in particular skirting trunking, with a covering apron (6) which engages over the trunking, at least comprising
- a bottom plate (1) with
- fastening openings (2) for fastening to a wall,
- mounts (3) for detachably fastening electrical installation apparatus which are fitted with two radially oriented retaining clips,
- and devices (4) for detachably mounting a covering hood which covers the bottom plate (1) and the electrical installation apparatus,
**characterised by** the feature:
- the mounts (3) are formed as bayonet-type mounts into which the retaining clips of the installation apparatus can be screwed.

2. Apparatus holder according to Claim 1, **characterised by** the feature:
- two pairs of bayonet-type mounts (3), staggered by 90°, are provided.

3. Apparatus holder according to Claim 1 or 2, **characterised by** the feature:
- at least one retaining lug (5) locks the retaining clips in the bayonet-type mounts (3).

4. Apparatus holder according to Claim 3, **characterised by** the feature:
- the retaining lug (5) is resilient.

5. Apparatus holder according to Claim 3 or 4, **characterised by** the feature:
- the retaining lug (5) is mounted at the bottom plate (1).

## Revendications

1. Support d'appareillage pour le montage d'appareillages d'installation électrique à côté de conduites de câbles posées verticalement ou horizontalement, notamment de conduites sous forme de plinthes, avec une jupe de recouvrement (6) qui engage en recouvrement le canal,
comprenant au moins une plaque de fond (1) munie
- d'ouvertures de fixation (2) pour la fixation sur une paroi,
- de moyens de fixation (3) pour la fixation amovible d'appareillages d'installation électrique qui sont équipés de deux pattes de fixation orientées radialement,
- et de dispositifs (4) pour le montage amovible d'un couvercle qui recouvre la plaque de fond (1) et les appareillages d'installation électrique,
**caractérisé par** la caractéristique suivante :
- les moyens de fixation (3) sont réalisés sous forme de fixations du genre baïonnettes, dans lesquelles peuvent être vissées ou introduites par rotation les pattes de fixation de l'appareillage d'installation.

2. Support d'appareillage selon la revendication 1, **caractérisé par** la caractéristique suivante :
- il est prévu deux paires, mutuellement décalées de 90°, de fixations (3) du genre baïonnettes.

3. Support d'appareillage selon la revendication 1 ou 2, **caractérisé par** la caractéristique suivante :
- au moins un ergot de retenue (5) bloque les pattes de fixation dans les fixations (3) du genre baïonnettes.

4. Support d'appareillage selon la revendication 3, **caractérisé par** la caractéristique suivante :
- l'ergot de retenue (5) est réalisé élastique.

5. Support d'appareillage selon la revendication 3 ou 4, **caractérisé par** la caractéristique suivante :
- l'ergot de retenue (5) est monté sur la plaque de fond (1).
